# EUROPEAN PATENT APPLICATION

(11) **EP 2 075 736 A2**
(43) Date of publication of application: **01.07.2009**
(21) Application number: 08252494.3
(22) Date of filing: 23.07.2008
(51) Int. Cl.: G06F 21/20

(54) **Method for verifying server end apparatus**

(30) Priority: 25.12.2007 TW 96149928
(71) Applicant: Tatung Company, Taipei 104 (TW); Tatung University, Taipei 104 (TW)
(72) Inventor: Chen, Chih-Cheng, Gueishan Township Taoyuan County 333 (TW); Tseng, Chi-Hsing, Taichung City 406 (TW); Lin, Tzung-Hsi, Sijhih City Taipei County (TW)
(74) Representative: Johnson, Terence Leslie

(57) **Abstract**

A method for verifying a server end apparatus, suitable for verifying the identity of a server end apparatus from a client end apparatus, is provided. In the present invention, authentication data is sent to the server end apparatus by the client end apparatus (S208), such that the server end apparatus verifies the authentication data (S503). Afterwards, the server end apparatus must return an initial number (S213), which is preset by the user, to the client end apparatus to verify whether the initial number is correct or not (S217). If the initial number is incorrect, the connection with the server end apparatus is shut down (S319). Therefore, the efficiency for verifying the server end identity is strengthened, so as to enhance the security.

## Description

### BACKGROUND OF THE INVENTION

### 1. Field of the Invention

The present invention generally relates to a method for verifying an identity, in particular, to a method for verifying an identity of a server end apparatus by a client end apparatus.

### 2. Description of Related Art

In recent years, the network has gradually become an important tool for information propagation and communication in society. Since the network has the advantages of being timely, convenient, and prevailing, network applications such as online shopping, online auction, online search engine, or even internet banking, have gradually been accepted by the mass of society.

Along with prevailing diverse network services, in order to manage the users' authorities conveniently, many websites have successively adopted a membership system, for example, a user account and a password are taken as authentication data, which not only can verify the user's identity, but can also effectively manage the user's authority. However, on the other hand, as the prevailing of network, the network attack events have occurred frequently. For example, some unscrupulous hackers utilize E-mail or instant message software to disperse Trojan programs, and then steal the users' important messages through using the Trojan programs.

However, currently, a new cheating manner has appeared, the cheater utilizes a fake website to steal the user's account and password, that is, the commonly so-called Phishing. The phishing means utilizing a fake website almost identical to the official website, and cheating the user to link to the fake website through various manners (for example, the data expires), such that the user may log in the fake website through inputting the user account and password. Therefore, once the user has input the account and the password, the account and the password are stolen, and in addition, the user's personal information including the name, address, phone number, or credit card number might be stolen as well.

### SUMMARY OF THE INVENTION

Accordingly, the present invention is directed to a method for verifying a server end apparatus, in which not only the server end apparatus can verify a client end apparatus, the client end apparatus can also verify the server end apparatus, so as to achieve an efficacy of interactively verifying the identities.

The present invention provides a method for verifying a server end apparatus, suitable for verifying an identity of the server end apparatus by a client end apparatus. The method includes firstly sending an authentication data to the server end apparatus, such that the server end apparatus verifies the authentication data. Then, an initial number returned by the server end apparatus is received to verify whether the initial number is correct or not. If the initial number is incorrect, the connection with the server end apparatus is shut down.

In an embodiment of the present invention, after the step of sending the authentication data to the server end apparatus, if the authentication data is erroneous, a notification message returned by the server end apparatus is received, so as to re-send the authentication data.

In an embodiment of the present invention, before the step of verifying whether the initial number is correct or not, whether the initial number returned by the server end apparatus is received within a specific time period is determined. If the initial number is not received within the specific time period, the client end apparatus determines whether the server end apparatus returns an initial number in a fixed field of a website or not, and if the returned initial number is not received yet within the specific time period, it is determined to be a fake website, and an alert message is generated. If the initial number returned from the server end is received, the user checks whether the initial number is correct or not. Furthermore, if the initial number is verified to be incorrect, the system prompts an alert message and automatically records the domain name of the server end apparatus in a block list.

In an embodiment of the present invention, before the step of sending the authentication data to the server end apparatus, the authentication data is established to the server end apparatus, and an initial number is provided to the server end apparatus.

In an embodiment of the present invention, after the step of sending the authentication data to the server end apparatus, the server end apparatus verifies whether the authentication data is correct or not. If the authentication data is correct, the server end apparatus returns the initial number to the client end apparatus; otherwise, if the authentication data is incorrect, the server end apparatus returns a notification message to the client end apparatus. When the authentication data is incorrect, a login error time is accumulated to determine whether the login error time reaches a specific value or not. If the login error time reaches the specific value, the server end apparatus shuts down the connection with the client end apparatus; otherwise, if the login error time does not reach the specific value, the server end apparatus returns the notification message to the client end apparatus.

In an embodiment of the present invention, the authentication data conventionally contains a user account, a password, and/or an personal identity number.

In the present invention, firstly, the client end apparatus sends authentication data to the server end apparatus, after the authentication data is verified to be correct by the server end apparatus, the server end apparatus returns an initial number, such that the client end apparatus verifies the identity of the server end apparatus through using the initial number, thereby achieving the interactive verification. Therefore, the efficiency for verifying the identity is strengthened, so as to prevent the attacks from fake websites.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a flow chart of a method for verifying a server end apparatus according to an embodiment of the present invention; and

FIG. 2 is a flow chart of a method for interactively verifying the identities according to an embodiment of the present invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or similar parts.

In order to make the present invention be more comprehensible, the following embodiments are recited as specific examples for implementing the present invention accordingly. Those of ordinary technologies in the art implement the following embodiments in the form of computer programs, utilize a computer-readable storage medium (e.g., a hard disc, a flash disc and the like) to store such a computer program, and further execute the program through using computers, such that the method for verifying the server end apparatus is achieved in an electronic automatic way. The implementation of those ordinary technologies is inconvenient, depending upon auxiliary tokens.

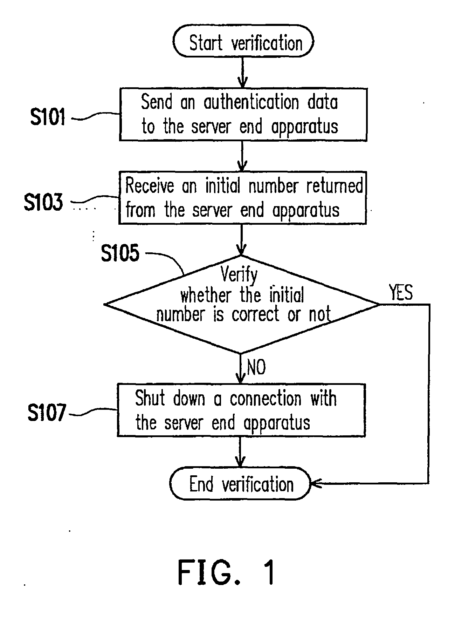

FIG. 1 is a flow chart of a method for verifying a server end apparatus according to an embodiment of the present invention. Referring to FIG. 1, firstly, when a user intends to log in a server end apparatus over network to perform online transaction or other operations, as shown in Step S101, a client end apparatus sends authentication data to the server end apparatus, such that the server end apparatus verifies the identity of the client end apparatus through using the authentication data (that is, the user's identity). The authentication data is, for example, a user account, a password, and/or personal identity number.

Taking internet banking as an example, the server end apparatus of the bank may assign a group of user account and password to the user, and meanwhile the user provides an identity card number to the server end apparatus of the bank. When the user wants to log in the server end apparatus of the bank, the user must input the correct identity card number, user account and password before the user logs in. Definitely, the user may also change the password assigned by the server end apparatus. However, the above example is merely intended to demonstrate the present invention, in practice, only one group of user account and password may be taken as the authentication data, which is determined depending upon the actual requirements, but not intended to restrict the application scope of the authentication data.

Next, after the server end apparatus verifies that the authentication data is correct, in Step S103, the client end apparatus receives an initial number returned from the server end apparatus. In other words, after the server end apparatus has confirmed the user's identity, it returns an initial number corresponding to the authentication data to the client end apparatus.

Taking internet banking as an example, when the user opens an account in the bank, a group of initial numbers is preset in the server end apparatus of the bank. When the user performs network transactions (for example, transfer, and balance enquiry, etc) on the user's own computer (i.e., the client end apparatus) over the network, once the server end apparatus of the bank confirms that the authentication data input by the user is correct, an initial number corresponding to the authentication data is returned to the user's computer. It should be noted that, the user at the client end apparatus needs to change such an initial number depending as desired, so as to maintain the security of such an initial number.

Then, in Step S105, the user on the client end apparatus verifies whether the initial number is correct or not. For example, it is determined whether the initial number satisfies a preset initial number or not, so as to verify the identity of the server end apparatus that is logged in currently. In actual application, the initial number preset in the server end apparatus may be input into the client end apparatus in advance to serve as the initial number. Once the client end apparatus receives the initial number sent from the server end apparatus, it compares whether the received initial number is identical to the preset initial number or not. Definitely, it may be directly determined by the user, that is, once the client end apparatus receives the initial number returned from the server end apparatus, the initial number is displayed on the screen, such that the user confirms whether the initial number is correct or not manually. However, it is only taken as an example for illustration, but not to restrict the application scope thereof.

Furthermore, before the client end apparatus verifies whether the initial number is correct or not, it is determined whether the initial number returned from the server end apparatus is received within a specific time period or not. If the client end apparatus does not receive the initial number within the specific time period, the client end apparatus prompts an alert message, so as to inform the user that such a server end apparatus might not be a valid server end apparatus. For example, if the server end apparatus is a fake website, since the fake website cannot obtain the initial number corresponding to the authentication data, it cannot return the initial number. At this time, after the specific time period, since the response expires, the client end apparatus prompts an alert message to inform the user.

Then, if the initial number is incorrect (for example, it does not comply with the preset initial number), as shown in Step S107, the client end apparatus shuts down the connection with the server end apparatus. In addition, the client end apparatus may further prompt an alert message to inform the user that the server end apparatus being logged in may be a fake website, and also record a domain name of the server end apparatus to a block list.

Taking internet banking as an example, if the initial number returned from the server end apparatus is incorrect, the client end apparatus immediately shuts down the connection with the server end apparatus, and meanwhile, the user may call the bank to stop depositing or drawing to/from the bank account, thereby preventing the savings from being stolen.

The procedure returns to Step S105, if the initial number is correct, the verification is finished, so as to continue the subsequent operations, for example, beginning the network transaction.

In view of the above, the identity of the server end apparatus may be verified through the method in the above embodiment, thereby effectively preventing the user from being cheated by the fake website.

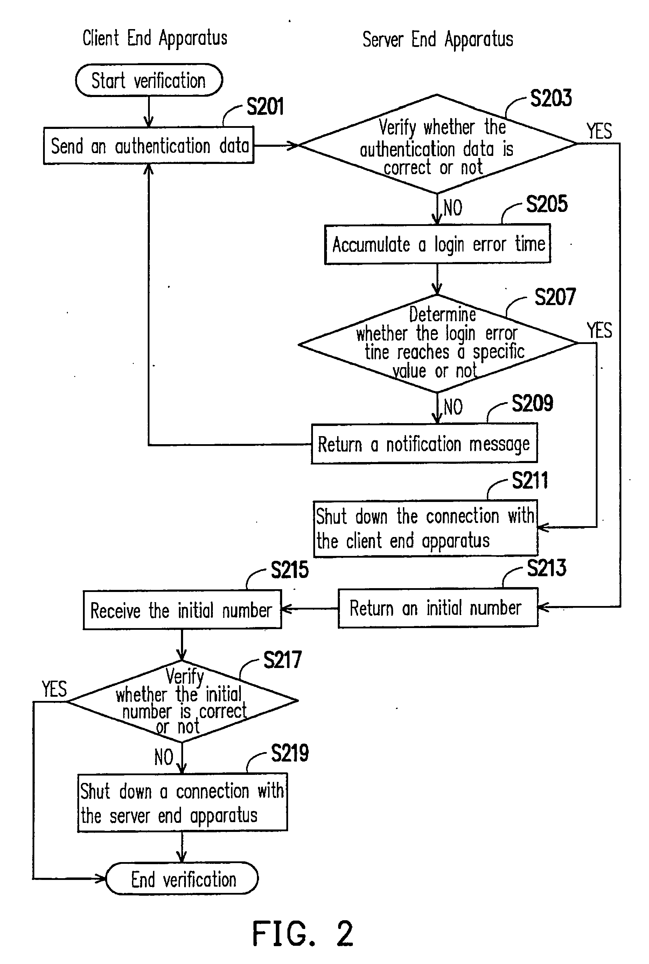

The following embodiment is recited to further illustrate a method for interactively verifying the identities between the client end apparatus and the server end apparatus. FIG. 2 is a flow chart of a method for interactively verifying the identities according to an embodiment of the present invention. Referring to FIG. 2, firstly, in Step S201, the client end apparatus sends an authentication data to the server end apparatus, so as to log in the server end apparatus. For example, the user inputs the user account and the password at the client end apparatus, so as to log in the server end apparatus.

Once the server end apparatus receives the authentication data, as shown in Step S203, the server end apparatus verifies whether the authentication data is correct or not. For example, once the server end apparatus receives the user account and the password, it searches its own database to check if such a user account exists or not. If the user account exists, the server end apparatus continues to determine whether the received password is correct or not.

If the authentication data is incorrect, as shown in Step S205, the server end apparatus accumulates a login error time. Next, in Step S207, the server end apparatus determines whether the login error time reaches a specific value or not. If it does not reach such a specific value, the procedure turns to Step S209, so as to return a notification message to the client end apparatus, such that the client end apparatus resends the authentication data to the server end apparatus. Otherwise, if the login error time reaches the specific value, the procedure executes Step S211, in which the server end apparatus shuts down the connection with the client end apparatus.

Taking internet banking as an example, the server end apparatus of the bank may be set as shutting down the connection with the client end apparatus if the authentication data is input incorrectly for three times (the specific value), so as to prevent some person with evil intent from testing repeatedly to steal the user's account and password. Furthermore, the server end apparatus of the bank may also record the source IP address of the connection with the client end apparatus failed to log in, after the login error time reaches three times, and then terminate the authority of the user account that has been tested repeatedly.

Then, the procedure returns to Step S203, if the authentication data is correct, it performs Step S213, in which the server end apparatus returns an initial number corresponding to the authentication data to the client end apparatus. Afterwards, in Step S215, the client end apparatus receives the initial number returned from the server end apparatus.

Afterwards, in Step S217, the client end apparatus verifies whether the initial number is correct or not, so as to confirm the identity of the server end apparatus. Step S217 in this embodiment is the same as or similar to Step S105 of the above embodiment, which thus will not be further described herein any more. Once the client end apparatus verifies that the initial number is correct, it finishes the verification process, so as to continue the subsequent operations, for example, online transaction of the internet banking. On the contrary, once the client end apparatus verifies the initial number is incorrect, as shown in Step S219, the client end apparatus immediately shuts down the connection with the server end apparatus, prompts an alert message, and meanwhile records the domain name of the server end apparatus into a block list.

To sum up, through the method in the above embodiments, not only the server end apparatus can verify the client end apparatus that intends to log in, but the client end apparatus can also verify whether the server end apparatus to be logged in is a fake website or not, so as to ensure that the server end apparatus is a correct official website, thereby further strengthening the efficiency of verifying the identity.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A method for verifying a server end apparatus, suitable for verifying an identity of a server end apparatus by a client end apparatus, comprising:
sending an authentication data to the server end apparatus, such that the server end apparatus verifies the authentication data;
receiving an initial number returned by the server end apparatus;
verifying whether the initial number is correct or not; and
if the initial number is incorrect, shutting down a connection with the server end apparatus.

2. A method for verifying a server end apparatus according to claim 1, after the step of sending the authentication data to the server end apparatus, further comprising:
receiving a notification message returned by the server end apparatus, so as to re-send the authentication data.

3. A method for verifying a server end apparatus according to claim 1 or claim 2, before verifying whether the initial number is correct or not, further comprising:
determining whether the initial number returned by the server end apparatus is received within a specific time period or not; and
if the initial number is not received yet within the specific time period, prompting an alert message.

4. A method for verifying a server end apparatus according to any preceding claim, if the initial number is incorrect, further comprising:
prompting an alert message.

5. A method for verifying a server end apparatus according to claim 1, before sending the authentication data to the server end apparatus, further comprising:
establishing the authentication data to the server end apparatus.

6. A method for verifying a server end apparatus according to claim 1, before sending the authentication data to the server end apparatus, further comprising:
providing the initial number to the server end apparatus.

7. A method for verifying a server end apparatus according to claim 1, if the initial number is incorrect, further comprising:
recording a domain name of the server end apparatus to a block list.

8. A method for verifying a server end apparatus according to claim 1, after the step of sending the authentication data to the server end apparatus, further comprising:
the server end apparatus verifying whether the authentication data is correct or not;
if the authentication data is correct, the server end apparatus returning the initial number to the client end apparatus; and
if the authentication data is incorrect, the server end apparatus returning a notification message to the client end apparatus.

9. A method for verifying a server end apparatus according to claim 8, if the authentication data is incorrect, further comprising:
accumulating a login error time;
determining whether the login error time has reached a specific value or not;
when the login error time reaches the specific value, the server end apparatus shutting down a connection with the client end apparatus; and
when the login error time does not reach the specific value, the server end apparatus returning the notification message to the client end apparatus.

10. A method for verifying a server end apparatus according to any preceding claim, wherein the authentication data is a user account, a password, and/or an identity card number.
